(19) **Europäisches Patentamt**
**European Patent Office**
**Office européen des brevets**

(11) Publication number: **0 227 322 B1**

(12) **EUROPEAN PATENT SPECIFICATION**

(45) Date of publication of patent specification: **21.11.91**   (51) Int. Cl.⁵: **B60C 11/06**

(21) Application number: **86309261.5**

(22) Date of filing: **27.11.86**

(54) **Heavy duty pneumatic tyre.**

(30) Priority: **30.11.85 JP 269918/85**

(43) Date of publication of application:
**01.07.87 Bulletin 87/27**

(45) Publication of the grant of the patent:
**21.11.91 Bulletin 91/47**

(84) Designated Contracting States:
**DE FR GB**

(56) References cited:
**EP-A- 0 069 464**
**DE-A- 2 921 377**
**FR-A- 2 444 576**
**US-A- 3 951 193**

**PATENT ABSTRACTS OF JAPAN, vol. 10, no. 55 (M-458)[2112], 5th March 1986; & JP-A-60 203 504 (SUMITOMO GOMU KOGYO K.K.) 15-10-1985**

**PATENT ABSTRACTS OF JAPAN, vol. 11, no. 1 (M-550)[2448], 6th January 1987; & JP-A-61 181 704 (TOYO TIRE & RUBBER CO. LTD) 14-08-1986**

**PATENT ABSTRACTS OF JAPAN, vol. 7, no. 279 (M-262)[1424], 13th December 1983; &**

**JP-A-58 156 405 (YOKOHAMA GOMU K.K.) 17-09-1983**

(73) Proprietor: **SUMITOMO RUBBER INDUSTRIES LIMITED**
**No. 1-1, Tsutsui-cho 1-chome**
**Chuo-ku Kobe-shi Hyogo 651(JP)**

(72) Inventor: **Ochiai, Kiyoshi**
**4-1 Manabiga OKA 3-chome Tarumi-ku**
**Kobe-shi Hyogo-ken(JP)**
Inventor: **Koyama, Toshio**
**10-10 Maidokai 3-chome Tarumi-ku**
**Kobe-shi Hyogo-ken(JP)**

(74) Representative: **Stewart, Charles Geoffrey**
**SP TYRES UK LIMITED Tyre Technical Division**
**Fort Dunlop Birmingham B24 9QT(GB)**

## Description

This invention relates to heavy duty pneumatic tyres and particularly to the tread patterns of such tyres.

In general, the tyres for heavy vehicles are provided in the tread with zig-zag or straight circumferential grooves extending circumferentially to provide drainage and handling stability. Such circumferential grooves tend to pick up stones and this is a severe problem for tyres used in stoney conditions.

When stone-pick up has occurred, it is difficult to discharge the stone from the groove because of the strong restraining force of the groove. As a result, the stone is then pressed into the rubber of the groove on every subsequent rotation of the tyre and this often causes severe damage. As countermeasures to stone pick-up, it has been proposed to widen the circumferential grooves or to provide steeply sloped sidewalls for the circumferential grooves so that the stone pick-up is lessened and discharged from the groove is promoted. Those countermeasures, however, have drawbacks. In the former, the wet grip and wear resistance are decreased and in the latter the wet grip property is decreased due to the groove width becoming substantially less as the tyre wears. A tyre according to the preamble of claim 1 is known, e.g. from DE-A-2921377. In this known tyre the width of the platforms at the base of the circumferential groove is about 0.5 times the width of the base of the circumferential groove discounting the platform, the width of the top of the platforms is 0.5 times the width of the top of the circumferential groove at the tread surface, the radial height of the platforms from the groove base is about 0.5 times the depth of the circumferential groove.

It is an object of the present invention to provide a heavy duty pneumatic tyre which avoids the stone trapping and retaining problem without loss of wet grip and wear resistance.

According to the present invention a heavy duty pneumatic tyre comprises a tread provided with two circumferential continuous grooves located one on each side of the tyre equator and provided with a series of spaced apart platforms said platforms in each circumferential groove being disposed on at least one of the groove sidewalls, characterised by the width of the platforms at the base of the circumferential groove being 0.2 to 0.7 times the width of the base of the circumferential groove discounting the platform, the width of the top of the platforms being 0 to 0.4 times the width of the top of the circumferential groove at the tread surface, the radial height of the platforms from the groove base being 0.2 to 1.0 times the depth of the circumferential groove, the total area of the platforms in each circumferential groove viewed radially inwards of the tyre being in the range of from 20% to 60% of the total groove base area of the circumferential groove, the angle of the sidewall of the platforms to the radial direction being larger than the angle of the opposite axially outer groove sidewall to the radial direction, and the angle of the axially inner groove sidewall to the radial direction being larger than the angle of the axially outer groove sidewall to the radial direction.

Fig. 1 is a plan view of a tyre tread showing one embodiment of the present invention;

Fig. 2 is a cross section view taken along the line A-A of Fig. 2;

Figs. 3 to 6 are plan views of alternative tread patterns;

Fig. 7(a) to (d) are cross sectional views of the circumferential grooves of prior art tread patterns.

Fig. 8(a) to (d) are cross sectional views of the circumferential grooves corresponding to embodiments 1 to 4 of this invention.

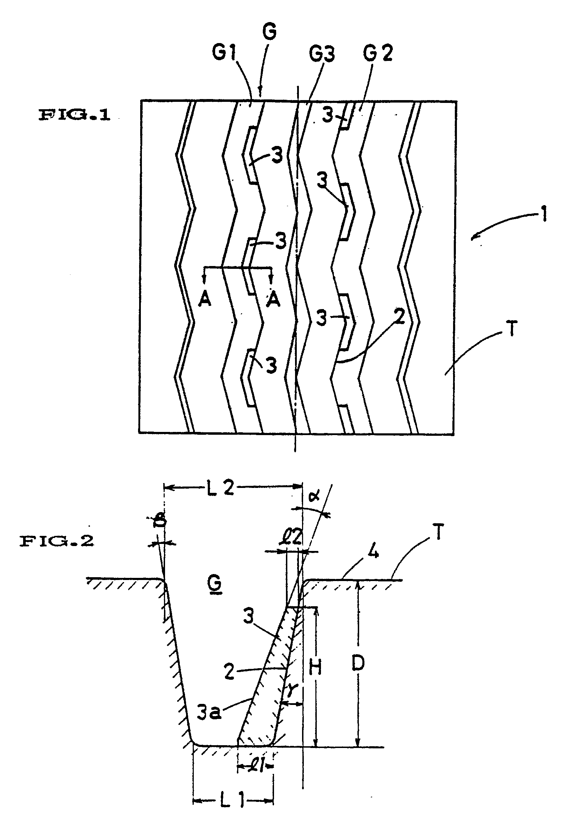

In Figs. 1 and 2 a heavy duty pneumatic tyre 1 is provided in the tread T thereof with a plurality of circumferential grooves G1, G2 and G3 each extending in a zig-zag fashion around the circumferential direction of the tyre. Each circumferential groove G1 and G2 is provided on the axially inner sides of the groove sidewalls 2 with platforms 3. The platforms are short in length and spaced apart around the circumferential direction. The two circumferential grooves G1 and G2 are positioned one on each side of the central circumferential groove G3 which is positioned along the centre line of the tread T. Each of the grooves G1 and G2 is wider than the groove G3. Hereinafter, the above mentioned circumferential grooves G1 and G2 will be referred to as circumferential grooves G.

Each platform 3, in this embodiment extends down the groove G, radially of the tyre from a point below the tread surface 4 to the bottom of the circumferential groove G. The platform 3 is dimensional such that the ratio $\ell 1/L1$ of the base width $\ell 1$ of the platform 3 at the bottom of the groove to the width L1 of the bottom of the circumferential groove G is between 0.2 and 0.7.

Furthermore, the ratio $\ell 2/L2$ of the width $\ell 2$ of the platform 3 at the top to the width 12 of the circumferential groove, is less than 0.4.

Next the ratio H/D of the height H of the platform 3 to the depth D of the circumferential groove G is more than 0.2.

Next the sum total of the surface areas of the platforms within each circumferential groove is in the range of 20% to 60% of the total groove base area of the circumferential groove.

2

The results of these dimensional limitations is to prevent stone damage at the base of the groove by largely ejcting stones which enter the grooves G1 and G2. It is also believed that initial stone pick-up is reduced. The ratio $l1/L1$ provides this effect without reducing the groove volume and thus the drainage properties, which would be the case if $l1/L1$ was substantially greater than 0.7. Similarly the choice of $l2/L2$ again provides groove volume.

In addition to these main features further dimensional features may be provided to improve still further the effectiveness of the invention.

The inclination angle $\alpha$ of the sidewall 3a of the platform 3 to the radial direction of the tyre is 1.3 times the inclination $\beta$ of the opposite outside groove sidewall; and the inclination angle $\gamma$ of the inside groove sidewall is larger than the inclination angle $\beta$ of the outside groove sidewall.

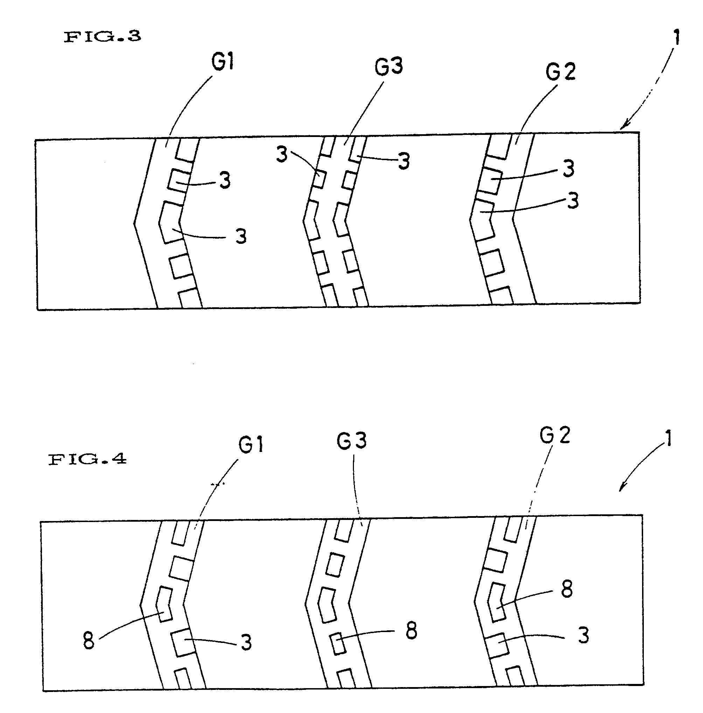

Further embodiments are shown in Figs 3 to 6 and these vary as follows:-

In Fig.3 the platforms 3 are provided on both sidewalls of the central circumferential groove G3.

In Fig.4 other independent platforms 8 are provided between the platforms 3 in the circumferential grooves G1 and G2.

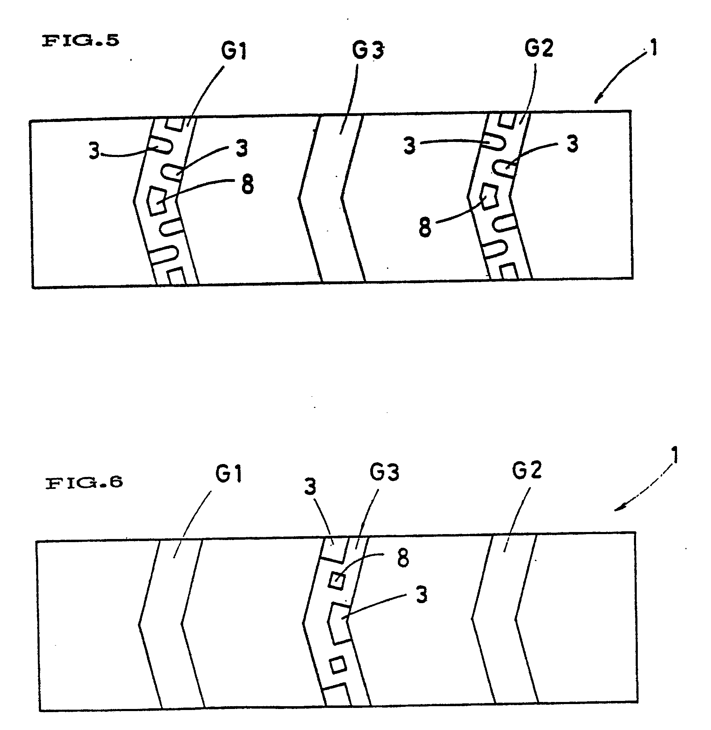

In Fig.5 the platforms 3 are provided on both the opposite groove sidewalls of each circumferential groove G1 and G2, and further, the grooves G1 and G2 are provided with other independent platforms 8.

To show the effectiveness of the invention four embodiments were tested in comparison with four tyres of the prior art design, called here comparative examples 1 - 4.

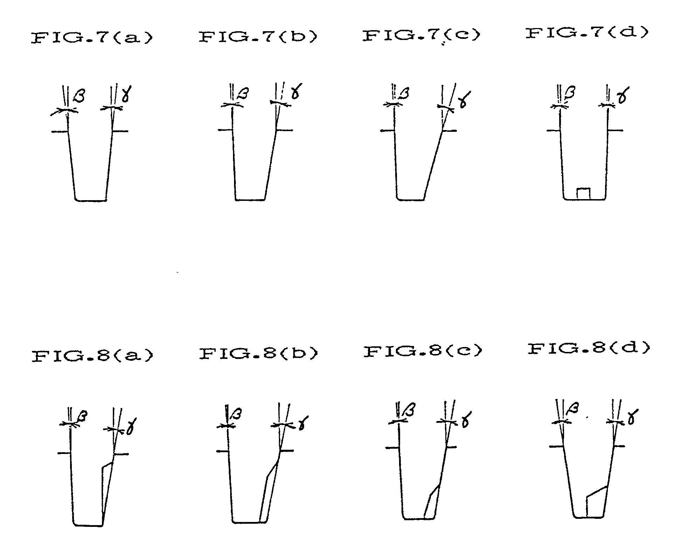

Each test tyre had the same width circumferential groove G but each groove G had the different sectional shape shown in each case in Fig.7(a) to (d) and Fig.8(a) to (d). Figs 7a to 7d being the prior art comparative example and Figs 8a) to 8d) the embodiments of the present invention.

The measured results are set out in Table 2 wherein the number of picked up stones is defined by an index on the assumption that the comparative example 1 is 100, and the smaller the value, the better the prevention of stone pick-up.

TABLE 1

| Tread pattern | Fig. 1 |
|---|---|
| Tyre size | 10.00R20 |
| Rim | 7.50V X 20 |
| Pressure | 8.0 kg/cm |
| Vehicle | Dump truck |
| Gross weight of vehicle | 12 ton |
| Running distance | 8 km (gravel road) and 6 km (paved road) |
| Average speed | 60 km/h |

Table 2

|  | Comparative examples | | | : | Embodiments of Invention | | | |
|---|---|---|---|---|---|---|---|---|
|  | 1 | 2 | 3 | 4 | 1 | 2 | 3 | 4 |
| Shape (Fig.) | 7a | 7b | 7c | 7d | 8a | 8b | 8c | 8d |
| $l1/L1$ | --- | --- | --- | 0.5 | 0 | 0.50 | 0.50 | 0.50 |
| H/D | --- | --- | --- | 0.3 | 0.75 | 0.75 | 0.50 | 0.25 |
| $l2/L2$ | --- | --- | --- | --- | 0.20 | 0.20 | 0.20 | 0.20 |
| $\gamma$ (°) | 10 | 15 | 20 | 10 | 15 | 15 | 15 | 15 |
| $\beta$ (°) | 10 | 10 | 10 | 10 | 10 | 10 | 10 | 10 |
| Picked up stone: Diameter (mm) | | | | Distribution (%) | | | | |
| 0.1- 2.0 | 0 | 0 | 0 | 0 | 0 | 0 | 0 | 0 |
| 2.1- 4.0 | 0 | 0 | 1 | 0 | 8 | 28 | 5 | 1 |
| 4.1- 6.0 | 1 | 9 | 11 | 0 | 25 | 59 | 16 | 10 |
| 6.1- 8.0 | 13 | 28 | 62 | 13 | 41 | 13 | 61 | 69 |
| 8.1-10.0 | 75 | 61 | 26 | 82 | 25 | 0 | 18 | 19 |
| 10.1 - | 11 | 2 | 0 | 5 | 1 | 0 | 0 | 1 |
| Index for stone pick up | 100 | 62 | 56 | 69 | 28 | 8 | 32 | 41 |

As can be seen from the test results the embodiments of the invention all had substantially improved stone trapping properties. This is due to less stones being picked up and to a more effective discharge of stones. The result is a reduction in expected tyre damage caused by stones and this affect has been shown to be obtained.

**Claims**

1. A heavy duty pneumatic tyre having a tread (T) provided with two circumferential continuous grooves (G1,G2) located one on each side of the tyre equator and provided with a series of spaced apart platforms (3), said platforms (3) in each circumferential groove (G1,G2) being disposed on at least one of the groove sidewalls (2), characterised by width ($l1$) of the platforms (3) at the base of the circumferential groove ($G_1,G_2$) being 0.2 to 0.7 times the width (L1) of the base of the circumferential groove discounting the platform, the width ($l2$) of the top of the platforms (3) being 0 to 0.4 times the width (L2) of the top of the circumferential groove at the tread surface (4), the radial height (H) of the platforms (3) from the groove base being 0.2 to 1.0 times the depth (D) of the circumferential groove, the total area of the platforms ( 3) in each circumferential groove (G1,G2) viewed radially inwards of the tyre being in the range of from 20% to 60% of the total groove base area of the circumferential groove, the angle ($\alpha$) of the sidewall (3a) of the platforms (3) to the radial direction being larger than the angle ($\beta$) of the opposite axially outer groove sidewall to the radial direction, and the angle ($\gamma$) of the axially inner groove sidewall (2) to the radial direction being larger than the angle ($\beta$) of the axially outer groove sidewall to the radial direction.

2. A tyre according to Claim 1 characterised by the tread being provided with a central groove (G3) without platforms (3).

3. A tyre according to either of Claims 1 or 2 characterised by the circumferential grooves (G1,G2) being of zigzag configuration around the circumference of the tyre.

4. A tyre according to claim 3 characterised by the circumferential grooves (G1,G2) being provided only at salient points of the axially inner groove sidewall with the platforms (3).

**Revendications**

4

1. Pneumatique pour poids lourds ayant une bande de roulement (T) qui a deux gorges circonférentielles continues (G1, G2) placées chacune d'un côté de l'équateur du pneumatique et ayant une série de plates-formes espacées (3), les plates-formes (3) de chaque gorge circonférentielle (G1, G2) étant disposées sur au moins l'une des parois latérales (2) des gorges, caractérisé en ce que la largeur ($l$1) des plates-formes (3) à la base de la gorge circonférentielle (G1, G2) est comprise entre 0,2 et 0,7 fois la largeur (L1) de la base de la gorge circonférentielle compte non tenu de la plate-forme, la largeur ($l$2) de la partie supérieure des plates-formes (3) est comprise entre 0 et 0,4 fois la largeur (L2) de la partie supérieure de la gorge circonférentielle à la surface de la bande de roulement (4), la hauteur radiale (H) des plates-formes (3) par rapport à la base de la gorge est comprise entre 0,2 et 1,0 fois la profondeur (D) de la gorge circonférentielle, la section totale des plates-formes (3) dans chaque gorge circonférentielle (G1, G2), observée radialement vers l'intérieur du pneumatique, est comprise entre 20 et 60 % de la section totale de la base de la gorge circonférentielle, l'angle ($\alpha$) de la paroi latérale (3a) des platesformes (3) par rapport à la direction radiale est supérieur à l'angle ($\beta$) de la paroi latérale opposée de la gorge axialement externe par rapport à la direction radiale, et l'angle ($\gamma$) de la paroi latérale (2) de la gorge axialement interne par rapport à la direction radiale est supérieur à l'angle ($\beta$) de la paroi latérale de la gorge axialement externe par rapport à la direction radiale.

2. Pneumatique selon la revendication 1, caractérisé en ce que la bande de roulement a une gorge centrale (G3) qui est dépourvue de plates-formes (3).

3. Pneumatique selon la revendication 1 ou 2, caractérisé en ce que les gorges circonférentielles (G1, G2) ont une configuration sinueuse autour de la circonférence du pneumatique.

4. Pneumatique selon la revendication 3, caractérisé en ce que les gorges circonférentielles (G1, G2) ne sont munies de plates-formes (3) qu'aux points saillants de la paroi latérale axialement interne de la gorge.

## Patentansprüche

1. Schwerlast-Luftreifen mit einem Laufstreifen (T), der mit zwei kontinuierlichen Umfangsnuten (G1, G2) versehen ist, die jeweils an den verschiedenen Seiten des Reifenäquators angeordnet sind, und mit einer Reihe von mit Abstand voneinander angeordneten Plattformflächen (3) versehen ist, wobei die Plattformflächen (3) in jeder Umfangsnut (G1, G2) an mindestens einer der Nutseitenwände (2) angeordnet sind, dadurch gekennzeichnet, daß die Breite (11) der Plattformen (3) vom Grund der Umfangsnut (G1, G2) das 0,2- bis 0,7-fache der Breite L1 des Nutgrunds der Umfangsnut ohne die Plattform ist, die Breite (12) der Oberseite der Plattformen (3) das 0- bis 0,4-fache der Breite (L2) der Oberseite der Umfangsnut an der Laufstreifenoberfläche (4) ist, die Radialhöhe (H) der Plattformen (3) vom Nutgrund das 0,2- bis 1,0-fache der Tiefe (D) der Umfangsnut ist, die Gesamtfläche der Plattformen (3) in jeder Umfangsnut (G1, G2), radial nach innen bezüglich des Reifens gesehen, in einem Bereich von 20% bis 60% der gesamten Nutgrundfläche der Umfangsnut ist, der Winkel ($\alpha$) der Seitenwand (3a) der Plattformen (3) gegen die Radialrichtung größer als der Winkel ($\beta$) der gegenüberliegenden axial äußeren Nutseitenwand zur Radialrichtung ist und der Winkel ($\gamma$) der axial inneren Nutseitenwand (2) zur Radialrichtung größer als der Winkel ($\beta$) der axial äußeren Nutseitenwand zur Radialrichtung ist.

2. Reifen nach Anspruch 1, dadurch gekennzeichnet, daß die Lauffläche mit einer Zentralnut (G3) ohne Plattformen (3) versehen ist.

3. Reifen nach einem der Ansprüche 1 oder 2, dadurch gekennzeichnet, daß die Umfangsnuten (G1, G2) sich zickzackförmig um den Reifenumfang erstrecken.

4. Reifen nach Anspruch 3, dadurch gekennzeichnet, daß die Umfangsnuten (G1, G2) nur an den vorspringenden Stellen der axial inneren Nutseitenwand mit den Plattformen (3) versehen sind.

FIG.1

FIG.2

FIG.3

FIG.4

FIG.5

G1  G3  G2  1

3  3

8

FIG.6

G1  3  G3  G2  1

8

3

FIG.7(a)   FIG.7(b)   FIG.7(c)   FIG.7(d)

FIG.8(a)   FIG.8(b)   FIG.8(c)   FIG.8(d)